# EUROPEAN PATENT SPECIFICATION

(11) **EP 1 297 731 B1**
(45) Date of publication and mention of the grant of the patent: **29.07.2009**
(21) Application number: 02447178.1
(22) Date of filing: 19.09.2002
(51) Int. Cl.: A01D 17/10, A01D 33/02

(54) **Potato lifter**
Roder für Kartoffeln
Arracheuse de pommes de terre

(30) Priority: 27.09.2001 BE 200100624
(43) Date of publication of application: 02.04.2003
(73) Proprietor: AVR bvba, 8800 Roeselare (BE)
(72) Inventor: Paesschesoone, Steven, 8840 Staden (BE)
(74) Representative: Van Reet, Joseph

(56) References cited:
- EP-A- 0 203 280
- WO-A-00/00012
- DE-A- 10 107 612
- DE-A- 19 524 145
- US-A- 956 821

## Description

The present invention relates to a potato lifter, comprising at least one lifting unit, a first screening belt for screening out soil from the potatoes lifted by the lifting unit, and a second screening belt, which connects to the first screening belt and rotates in a predetermined direction, at least one steep part of which second screening belt is directed upwards in the abovementioned direction of rotation at a predetermined angle greater than 20°, and with a coarse-meshed haulm-removing belt mounted in such a way that it rotates about said second screening belt, likewise in the abovementioned direction of rotation, and in such a way that said haulm-removing belt extends at least with a part of its width between the first and the second screening belts, the coarse-meshed haulm-removing belt being guided closely against the steep part of the second screening belt, in order to prevent uncontrolled rolling back of the lifted potatoes at least in this steep part of the second screening belt.

In the case of most potato lifters known in practice the second screening belt is disposed at an angle of less than 20°. With a steeper arrangement of this screening belt, although better cleaning of the potatoes could be obtained, the larger potatoes in particular would roll back too much. This would lead to too much damage being caused to the potatoes, in particular to the larger potatoes, which have the greatest tendency to roll back, and which are also the most susceptible to damage. The disadvantage of a smaller angle of inclination of the second screening belt, on the other hand, is that said screening belt has to extend over a considerable length in order to be able to clean the potatoes adequately, and particularly also to convey these potatoes to a sufficiently high level. All this leads to a longer, more expensive and also heavier machine. A second screening belt disposed in a flatter arrangement also imposes limits on the size of the wheels of the potato lifter.

A potato lifter according to the preamble of claim 1 is disclosed in EP-B-0,212,174 and WO-A-00/00012. In order to solve the problem of too much rolling back of potatoes, these patent publications propose using a haulm-removing belt that rotates about the second screening belt for this purpose. Carrier plates or carrier fingers are placed on the transverse bars of this haulm-removing belt, in such a way that carrier elements are formed, which carrier elements are made to rotate upwards closely against the second screening belt and along with the latter, in order in this way to push the potatoes along this second screening belt. A disadvantage of both known potato lifters is that the provision of the carrier plates or carrier fingers, and of the supporting means necessary for them, not only increases the cost of the machine, but also requires a relatively great vertical distance between the top end of the first screening belt and the bottom end of the second, in such a way that at the transition between these two screening belts the potatoes run a great risk of being damaged. A further disadvantage of these known machines is that in wet, sticky soil, such as clayey or loamy soil, the soil adheres to the carrier plates or carrier fingers, with the result that the functioning of the machine is disrupted. The machine according to EP-B-0,212,174 also has the disadvantage that the carrier plates projecting downwards do not allow haulm-stripping elements to be provided on the underside of the haulm-removing belt, for the purpose of detaching potatoes that remain hanging on the haulm.
The object of the invention then is to provide a new potato lifter, in which at least a part of the second screening belt is disposed at an angle greater than 20°, and in which rolling back of the potatoes is prevented by the haulm-removing belt, without relatively high carrier plates or carrier fingers being fitted on the transverse bars of this haulm-removing belt, with the result that the risk of damage to the potatoes at the transition between the first and the second screening belt is considerably reduced.

To this end, the potato lifter according to the invention is characterized in that the abovementioned predetermined angle at which at least the abovementioned steep part of the second screening belt is directed upwards is less than 40°, and in that the haulm-removing belt is a barred belt with transverse bars on which no projections are provided, or on which projections are provided that project less than 4 cm from the surface of the transverse bars, the height of the part of the width of the haulm-removing belt extending between the first and the second screening belts being less than 8 cm.

Selecting the angle of inclination of the second screening belt between 20 and 40° makes it possible, on the one hand, to produce a shorter and cheaper machine and to obtain a good cleaning action. Furthermore, in the case of such angles of inclination the overall height of the haulm-removing belt can be reduced. By taking said belt lower than 8 cm, the height of fall at the transition between the first and the second screening belts can be limited, thus also limiting the damage to the potatoes. A further important feature is that the projections that may be provided on the transverse bars of the haulm-removing belt project less than 4 cm from the surface of said transverse bars. Generally, these projections will project above the surface of the transverse bars, i.e. above the plane determined by the top sides of the bars, but the projections may, if desired, also still project downwards below the bottom surface of the bars. The advantage of limiting the length of any projections present in this way is, on the one hand, that the height of the haulm-removing belt is limited and, on the other hand, that such projections are simple to provide, without much additional cost. The fact is that in practice the transverse bars are usually composed of a central metal rod, around which a rubber jacket is cast. During the casting of this rubber jacket, the necessary projections can also be formed at the same time.

Projections that are at such a short distance from each other that they ensure that the potatoes cannot roll back can be provided on the transverse bars of the haulm-removing belt. However, it is preferable if no projections are provided on the transverse bars of the haulm-removing belt, or only projections which are situated at a distance from each other that is at least 8 cm, and in particular at least 10 cm, and which are therefore not intended for retaining the potations, but are designed, for example, for fastening longitudinal cords or straps, or for pulling along the haulm that falls onto the transverse bars and onto these cords or straps.

In a preferred embodiment of the potato lifter according to the invention, the bars of the haulm-removing belt are disposed along the steep part of the second screening belt at such a great predetermined distance from said second screening belt that said bars themselves prevent uncontrolled rolling back of the potatoes on the steep part of the second screening belt.

According to the invention, it has in fact been found that by placing the transverse bars at a sufficiently great distance from the surface of the second screening belt, and by making the angle of inclination of the second screening belt less than 40°, it is not necessary, as in the case of EP-B-0,212,174 and WO-A-00/00012, to fit carrier plates or carrier fingers on the transverse bars in such a way that the problem of the adhering soil can be avoided. What can be done, for example, as already indicated above, is to provide a limited number of projections for carrying along the haulm, or for fastening longitudinal cords or longitudinal straps.

Further advantages and details of the invention will emerge from the description that follows of a preferred embodiment of a potato lifter according to the invention. This description is, however, given merely as an example, and is not intended to limit the scope of protection as determined by the claims. The reference numerals given in the description relate to the appended drawings, in which:
Figure 1 shows diagrammatically a perspective view of the components of a potato lifter according to the invention that are most important for lifting and cleaning the potatoes, in this case, for the sake of clarity, the rotor cam and double roller disposed above the second studded belt for lateral discharge of the potatoes and clods being omitted;
Figure 2 shows the same view as that of Figure 1, but in this case the rotor cam and the double roller on the second studded belt are in fact shown, but the haulm-stripping elements on the top of the haulm-removing belt are not shown;
Figure 3 shows a side view of the components of the potato lifter illustrated in the previous figures;
Figure 4 shows on a larger scale a perspective view of a part of the haulm-removing belt of the potato lifter illustrated in the previous figures;
Figure 5 shows a front view of a transverse bar of the haulm-removing belt illustrated in Figure 4;
Figures 6 to 8 show cross sections through the bars of the haulm-removing belt according to the arrows VI-VI, VII-VII and VIII-VIII in Figure 5; and
Figure 9 shows, on a larger scale, a side view of the second screening belt and the potatoes carried along it by means of the haulm-removing belt.

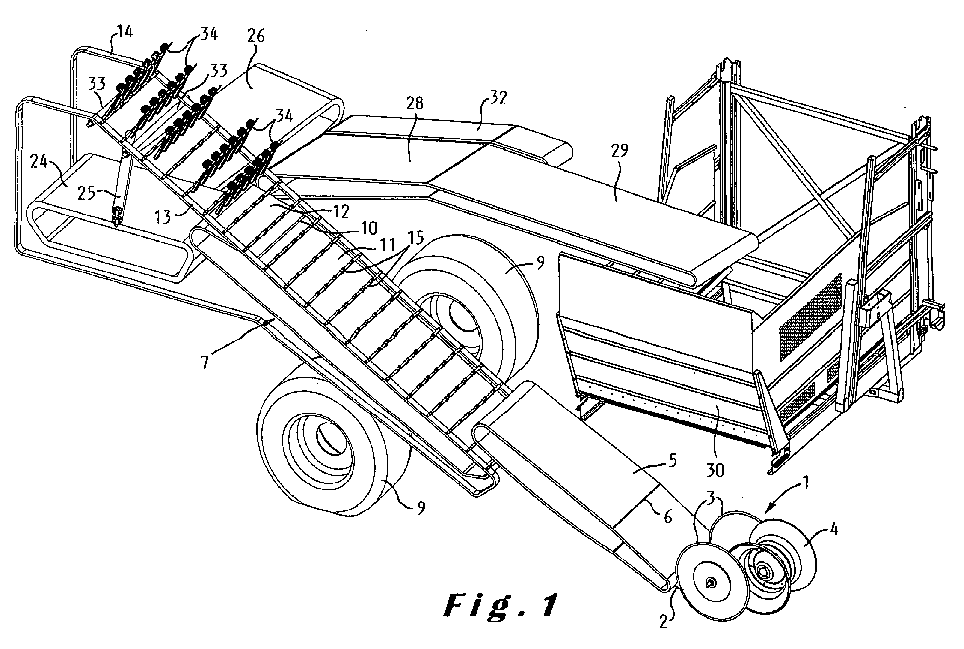

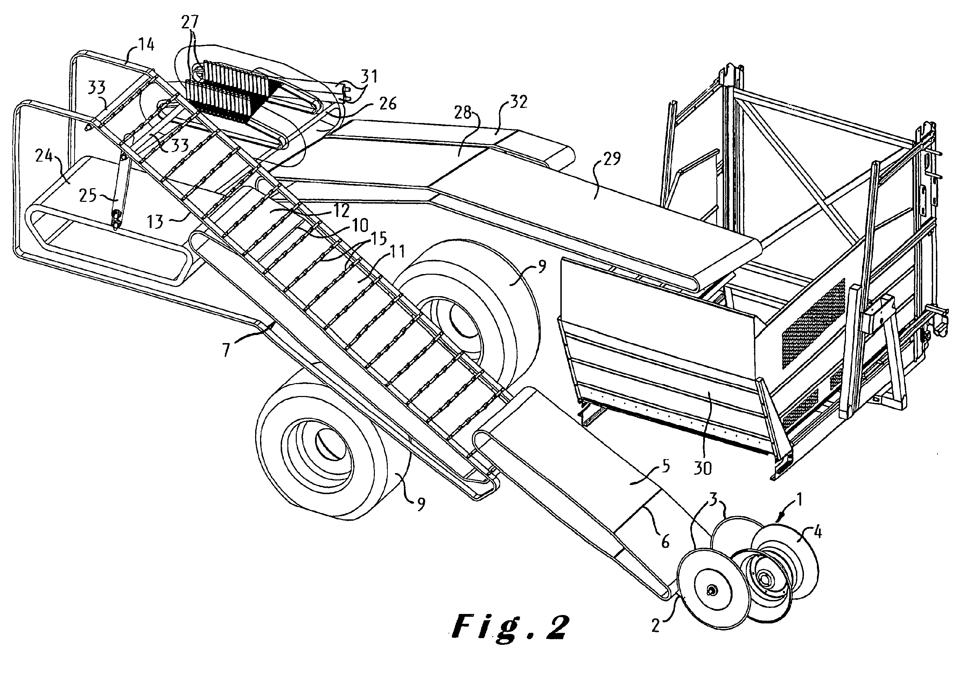

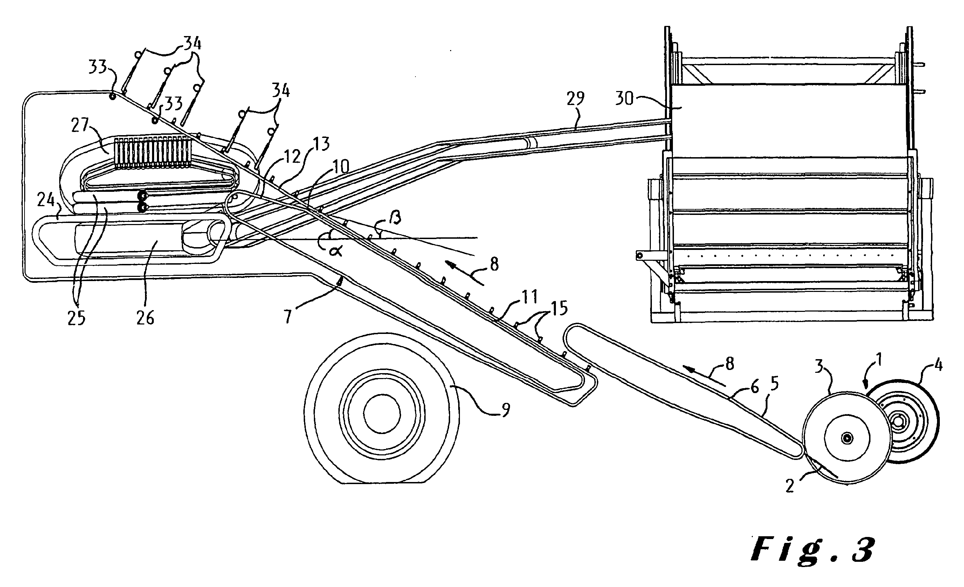

The potato lifter according to the invention illustrated diagrammatically in Figures 1 to 3 is a drawn potato lifter, of which the general design, with a chassis, wheels and drive systems of the various screening belts and/or conveyor belts, is known per se, and will therefore not be described in any further detail here. Instead of being of a design that is drawn, the potato lifter may also be self-propelled. The potato lifter may further be suitable not only for lifting potatoes, but may also or, provided that some slight adjustments are made, be suitable for lifting other crops such as carrots, or for picking up onions and the like.

The potato lifter illustrated is provided with a lifting unit 1, formed by a lifting share or lifting blade 2 and corresponding lateral discs 3 and a ridge follower 4. If desired, the potato lifter may be provided with two or more of such lifting units. The lifting share 2 is followed by a first upwardly slanting fine-meshed screening belt or screening mat 5, for screening out soil from the potatoes lifted by the lifting unit 1. The first screening belt is guided around rollers both at its bottom end and at its top end, a further guide roller being provided in such a way that a bend 6 is formed in the top surface.

For the sake of simplicity, these rollers, which are known per se, have not been shown in the figures. The screening belt 5 is preferably composed of interconnected transverse bars with a metal rod, which can sometimes be clad with rubber or another elastic synthetic material. This first screening belt 5 in practice is known as the digging mat.

Connecting to the top end of the first screening belt 5 is a second screening belt 7, which is constructed in the same way as the first screening belt 5, and which is also guided around rollers (not shown) at the bottom and at the top. Said second screening belt 7 rotates in the same direction as the first screening belt 5, more particularly in the direction of the arrows 8. If desired, one or more further screening belts may be provided between the digging mat 5 and the second screening belt 7. On the other hand, it is also possible for the second screening belt to be disposed in the transverse direction of the potato lifter, rather than in the longitudinal direction.

What is essential to the invention is that at least a part of the second screening belt 7 is directed upwards at an angle α that is greater than 20°, but less than 40°, in the direction of rotation 8 of said screening belt. The angle α is preferably greater than 25°, in particular greater than 27°, and less than 35°, the greatest preference being for an angle α of 28 to 32°. Through this choice of the angle of inclination α, the lifted potatoes can be taken more quickly to the required height, the machine can be of a construction that is shorter and cheaper, and larger wheels 9 can also be provided, if desired. In the embodiment illustrated, towards the top end of the second screening belt 7, a bend 10 is provided in said screening belt, the bottom, steep part 11 of the second screening belt 7 forming an angle α of approximately 30°, while the top, less steep part 12 of said screening belt forms an angle β of approximately 15°.

In order to separate the haulm from the lifted potatoes, a haulm-removing belt 13 is mounted in the machine according to the invention in such a way that it rotates about the second screening belt 7, in the same direction of rotation 8 as said second screening belt 7, and in such a way that the haulm-removing belt 13 extends at least over a part of its width between the first and the second screening belts. Said haulm-removing belt 13 is a coarse-meshed barred belt, on which the haulm remains lying, but through which the potatoes fall. In the potato lifter according to the invention, said haulm-removing belt is provided not only for separating out and removing the large haulm parts, but also for preventing uncontrolled rolling back of the potatoes on the steep part 11 of the second screening belt 7. For this purpose, in the steep part 11 of the second screening belt 7 said haulm-removing belt 7 is guided so closely against said screening belt 7 that the potatoes, or at any rate the larger potatoes, cannot roll down between the haulm-removing belt and the second screening belt.

Notwithstanding the fact that in the potato lifter according to the invention uncontrolled rolling back of the potatoes on the second screening belt is prevented, uncontrolled rolling back of the potatoes on said screening belt is preferably still possible, this being in order to obtain a greater cleaning effect. The fact is that the drives of the second screening belt and the haulm-removing belt are preferably designed to make the second screening belt rotate at a speed that is equal to 1 to 1.4 times the speed of rotation of the haulm-removing belt. By making the second screening belt rotate at a greater speed than that of the haulm-removing belt, it is ensured that the potatoes roll along the second screening belt, but too rapid or, in other words, uncontrolled rolling back of the larger potatoes is prevented by the haulm-removing belt. The speed of rotation of said haulm-removing belt in fact determines the speed at which the potatoes will be conveyed upwards along the second screening belt.

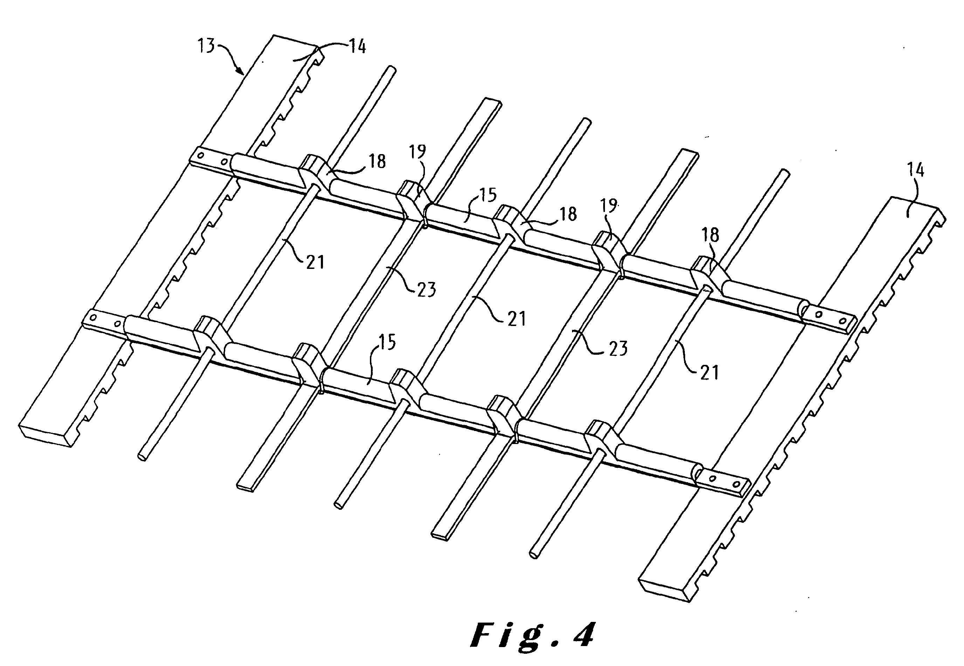

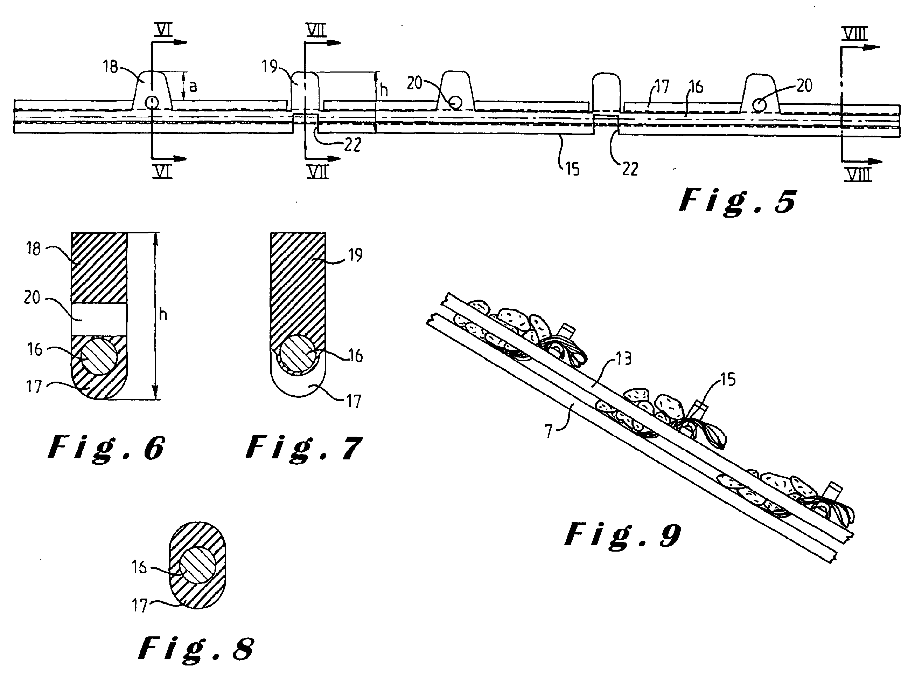

A possible embodiment of the haulm-removing belt 13 is shown in Figures 4 to 8. The haulm-removing belt 13 illustrated is formed by two lateral toothed belts 14, between which transverse bars 15 are provided. As can be seen clearly from the cross section according to Figure 8, said transverse bars are formed by a central metal rod 16, around which an elastic - in particular a rubber - cladding 17 is provided. Two types of rubber projections 18, 19, with a mutual spacing of approximately 10 cm, are formed on the transverse bars 15. The first type of projections 18 are provided with an aperture 20, through which a longitudinal cord 21 can be passed, while a recess 22 is provided below the second type of projections 19, in the rubber cladding 17 of the bars 15, for the purpose of fitting longitudinal straps 23. Said straps 23 and the cords 21 are designed to work with the bars 15 themselves to collect the haulm. The projections 18, 19 then help to ensure that the haulm that has been collected is pulled along by the haulm-removing belt.

In the case of the conventional haulm-removing belts 13 the projections 18, 19 are situated at a mutual distance of at least 8 cm, and in particular at a mutual distance of at least 10 cm. Owing to this relatively great mutual distance, said projections 18, 19 cannot prevent potatoes on the second screening belt 7 from rolling back in an uncontrolled manner, in other words past the transverse bars of the haulm-removing belt.

In the embodiment illustrated, uncontrolled rolling back of the potatoes through the transverse bars 15 themselves of the haulm-removing belt 13 is prevented by the fact that said transverse bars are disposed at a sufficiently great distance from the second screening belt, in such a way that they themselves project to a sufficient height above the second screening belt. In particular, said transverse bars 15 are disposed at a distance greater than 2 cm, and preferably at a distance of at least 3, and more particularly at a distance of at least 4 cm, from the second screening belt. This distance is preferably variable, in particular at least from 2.5 to 4.5 cm, and more preferably at least from 2 to 5 cm, in such a way that said distance can be set at the best value established experimentally. In this case it is possible in practice for the distance between the bars 15 of the haulm-removing belt 13 and the top surface of the second screening belt 7 to be greater than the smallest potatoes being conveyed along the screening belt, since these small potatoes have less of a tendency to roll back and, if they do roll back, they are retained by larger potatoes, and in particular also by haulm that remains adhering to the bars of the haulm-removing belt. This is illustrated diagrammatically in Figure 9.

In order to prevent uncontrolled rolling back of the potatoes, the transverse bars 15 of the haulm-removing belt 13 need not be exceptionally high. The height of said bars may in particular be less than 4.5 cm, and more particularly may even be less than 3.5 cm.

Instead of preventing the uncontrolled rolling back purely by means of the transverse bars, it is also possible, if desired, to provide additional projections on said bars. In order to produce as simple and cheap a design of haulm-removing belt as possible, and in order to limit the adherence of soil as much as possible, it is, however, preferable to provide as few projections as possible. In this respect it is also important according to the invention to ensure that any projections project over a distance 'a' of no more than 4 cm from the surface formed by the transverse bars of the haulm-removing belt, and that this is both above the top surface and possibly also below the bottom surface.

Another important feature of the potato lifter according to the invention is that the height 'h' of the part of the width of the haulm-removing belt that extends between the first and the second screening belt is less than 8 cm, in particular less than 7 cm, and preferably even less than 6 cm. This is possible by providing no projections on the transverse bars of the haulm-removing belt, or by providing only bars of a limited height. The advantage of such a "thin" haulm-removing belt is that the height of fall at the transition between the first and the second screening belts can be limited, and also that the haulm-removing belt can be produced in a simpler and therefore cheaper manner. A further advantage of the limited height that the haulm-removing belt projects above the second screening belt is that at the transition between the first and the second screening belts the potatoes in their fall will entrain less haulm, so that the haulm will be collected and removed more efficiently by the haulm-removing belt.

In the potato lifter according to the invention the second screening belt 7 can be followed by various further belts. In the embodiment illustrated, the second screening belt 7 is followed by a belt disposed in line with it and having projections, in particular by a studded belt 24, on which a set of driven rollers or brushes 25 placed one above the other is fitted, said rollers or brushes being placed in such a slanting position that they push the potatoes laterally off the studded belt 24, while minor impurities like stones, clods and pieces of haulm are removed under said rollers or brushes 25. The potatoes then arrive on a transverse studded belt 26, on which a double rotor cam 27 is fitted, in order to guide the potatoes to a conveyor belt 28, which forms a sorting table 29. By way of this conveyor belt 28, the potatoes then arrive in a bin 30.

Behind the double rotor cam 27, another set of rollers or brushes 31, rotating one above the other, is provided on the transverse studded belt 26, which rollers or brushes send the clods that pass between the rotor cam to a clod belt 32. On said clod belt 32 any potatoes that have been carried along can still be picked off manually. The minor impurities are again removed under the rollers or brushes 31.

In order to remove from the haulm any potatoes that may still be hanging on said haulm, haulm strippers are provided both on the top and on the bottom side of the haulm-removing belt. On the bottom side these haulm strippers are more particularly formed by one or more rollers 33 (amongst which a guide plate may be fitted if desired, so that the stripped potatoes arrive on the studded belt in front of the rollers 25), and on the top are formed by a set of rubber-clad springs 34. The potatoes detached by these haulm strippers fall either onto the first studded belt 24 or onto the less steep part 12 of the second screening belt 7.

It is preferable according to the invention for the distance between the haulm-removing belt and the second screening belt to increase at the level of this less steep part 12, in particular through the fact that the haulm-removing belt continues to run virtually straight on according to the angle of inclination α of the steep part of the second screening belt over the less steep part of the latter. In this way the haulm is separated more gradually from the potatoes, with the result that more haulm will remain lying on the haulm-removing belt. The first studded belt 24 can also be shorter in length.

It will be clear from the description given above of a special embodiment of the potato lifter according to the invention that numerous further modifications can be made to it without going beyond the scope of the appended claims. In particular, the arrangement of the various parts may be changed, or certain belts or cleaning means may be omitted or added.

## Claims

1. Potato lifter, comprising at least one lifting unit (I), a first screening belt (5) for screening out soil from the potatoes lifted by the lifting unit (1), and a second screening belt (7), which connects to the first screening belt (5) and rotates in a predetermined direction (8), at least one steep part (11) of which second screening belt (7) is directed upwards in the abovementioned direction of rotation (8) at a predetermined angle (α) greater than 20°, and with a coarse-meshed haulm-removing belt (13) mounted in such a way that it rotates about said second screening belt (7), likewise in the abovementioned direction of rotation (8), in such a way that said haulm-removing belt (13) extends at least with a part of its width between the first and the second screening belts (5 and 7), the coarse-meshed haulm-removing belt (13) being guided closely against the steep part (11) of the second screening belt (7), in order to prevent uncontrolled rolling back of the lifted potatoes at least in this steep part (11) of the second screening belt (7), **characterized in that** the abovementioned predetermined angle (α) is less than 40°, and **in that** the haulm-removing belt (13) is a barred belt with transverse bars (15) on which no projections are provided, or projections are provided that project less than 4 cm from the surface of the transverse bars (15), the height of the part of the width of the haulm-removing belt (13) extending between the first and the second screening belts (5 and 7) being less than 8 cm.

2. Potato lifter according to Claim 1, **characterized in that** the height of the part of the haulm-removing belt (13) that extends between the first and the second screening belt (5 and 7) is less than 7 cm, and preferably less than 6 cm.

3. Potato lifter according to Claim 1 or 2, **characterized in that** no projections are provided on the transverse bars (15) of the haulm-removing belt (13), or projections are provided that are situated at a distance from each other that is at least 8 cm and in particular at least 10 cm.

4. Potato lifter according to one of Claims 1 to 3, **characterized in that** the abovementioned bars (15) of the haulm-removing belt (13) have a height of less than 4.5 cm, and particularly a height of less than 3.5 cm.

5. Potato lifter according to one of Claims 1 to 4, **characterized in that** the abovementioned bars (15) of the haulm-removing belt (13) along the steep part (11) of the second screening belt (7) are disposed at a predetermined distance greater than 2 cm from said second screening belt (7).

6. Potato lifter according to Claim 5, **characterized in that** the abovementioned predetermined distance at which the bars (15) of the haulm-removing belt (13) are disposed from the second screening belt (7) along the steep part (11) of said second screening belt (7) is at least 3 cm, and preferably at least 4 cm.

7. Potato lifter according to one of Claims 1 to 6, **characterized in that** the distance at which the bars (15) of the haulm-removing belt (13) are disposed from the second screening belt (7) along the steep part (11) of said second screening belt (7) is variable, in particular at least in the range between 2.5 and 4.5 cm, and preferably at least in the range between 2 and 5 cm.

8. Potato lifter according to one of Claims 1 to 7, **characterized in that** the abovementioned bars (15) of the haulm-removing belt (13) are disposed along the steep part (11) of the second screening belt (7) at such a great predetermined distance from said second screening belt (7) that said bars (15) themselves prevent uncontrolled rolling back of the potatoes on the steep part (11) of the second screening belt (7).

9. Potato lifter according to one of Claims 1 to 8, **characterized in that** the abovementioned steep part (11) of the second screening belt (7) in the direction of rotation (8) of said screening belt (7) is followed by a less steep part (12), along this less steep part (12) the distance between the bars (15) of the haulm-removing belt (13) and the second screening belt (7) increasing in the direction of rotation (8) of the second screening belt (7), in particular through the fact that the haulm-removing belt (13) continues to run virtually straight according to the angle of inclination (α) of the steep part (11) of the second screening belt (7) along the less steep part (12) of the latter (7).

10. Potato lifter according to one of Claims 1 to 9, **characterized in that** the second screening belt (7) is followed by a third belt (24), in particular a studded belt (24), which third belt (24) is provided with projections on which the potatoes remain lying and between which smaller pieces of impurities such as pieces of haulm and small clods or stones are separated out.

11. Potato lifter according to one of Claims 1 to 10, **characterized in that** haulm strippers (33, 34) are provided both on the top and on the bottom side of the haulm-removing belt (13), for detaching potatoes that remain hanging on the haulm entrained by the haulm-removing belt (13).

12. Potato lifter according to one of Claims 1 to 11, **characterized in that** the abovementioned predetermined angle (α) at which at least the abovementioned steep part (11) of the second screening belt (7) is directed upwards is greater than 25°, and preferably greater than 27°.

13. Potato lifter according to one of Claims 1 to 12, **characterized in that** the abovementioned predetermined angle (α) at which at least the abovementioned steep part (11) of the second screening belt (7) is directed upwards is less than 35°, and preferably 28 to 32°.

14. Potato lifter according to one of Claims 1 to 13, **characterized in that** the second screening belt (7) is designed to rotate at a first speed, while the haulm-removing belt (13) is designed to rotate at a second speed, the ratio between the abovementioned first and second speeds being greater than or equal to 1, and preferably being less than 1.4.

## Patentansprüche

1. Kartoffelroder, welcher zumindest eine Rodeeinheit (1), ein erstes Siebband (5) zum Aussieben von Erde von den durch die Rodeeinheit (1) gerodeten Kartoffeln und ein zweites Siebband (7) umfasst, das mit dem ersten Siebband (5) verbunden ist und sich in eine vorbestimmte Richtung (8) dreht, wobei zumindest ein steiler Teil (11) des zweiten Siebbands (7) in der oben erwähnten Drehrichtung (8) in einem vorbestimmten Winkel (α) von mehr als 20° nach oben gerichtet ist, und mit einem grobmaschigen Krautband (13), welches so montiert ist, dass es sich um das erwähnte zweite Siebband (7) dreht, ebenso in die oben erwähnte Drehrichtung (8), sodass sich das erwähnte Krautband (13) mit zumindest einem Teil seiner Breite zwischen dem ersten und dem zweiten Siebband (5 und 7) ausstreckt, wobei das grobmaschige Krautband (13) dicht am steilen Teil (11) des zweiten Siebbands (7) geführt wird, um ein unkontrolliertes Zurückrollen der gerodeten Kartoffeln zumindest in diesem steilen Teil (11) des zweiten Siebbands (7) zu verhindern, **dadurch gekennzeichnet, dass** der oben erwähnte vorbestimmte Winkel (α) kleiner ist als 40° und dass das Krautband (13) ein Sprossenband mit Quersprossen (15) ist, auf dem keine Vorsprünge vorgesehen sind, oder Vorsprünge vorgesehen sind, die weniger als 4 cm über die Oberfläche der Quersprossen (15) hinausragen, wobei die Höhe des Teils der Breite des Krautbands (13), welcher sich zwischen dem ersten und dem zweiten Siebband (5 und 7) befindet, weniger als 8 cm beträgt.

2. Kartoffelroder nach Anspruch 1, **dadurch gekennzeichnet, dass** die Höhe des Teils des Krautbands (13), der sich zwischen dem ersten und dem zweiten Siebband (5 und 7) ausstreckt, weniger als 7 cm und vorzugsweise weniger als 6 cm beträgt.

3. Kartoffelroder nach Anspruch 1 oder 2, **dadurch gekennzeichnet, dass** keine Vorsprünge auf den Quersprossen (15) des Krautbands (13) vorgesehen sind oder dass Vorsprünge vorgesehen sind, die sich in einem Abstand voneinander befinden, der mindestens 8 cm und insbesondere mindestens 10 cm beträgt.

4. Kartoffelroder nach einem der Ansprüche 1 bis 3, **dadurch gekennzeichnet, dass** die oben erwähnten Sprossen (15) des Krautbands (13) eine Höhe von weniger als 4,5 cm haben und insbesondere eine Höhe von weniger als 3,5 cm.

5. Kartoffelroder nach einem der Ansprüche 1 bis 4, **dadurch gekennzeichnet, dass** die oben erwähnten Sprossen (15) des Krautbands (13) entlang des steilen Teils (11) des zweiten Siebbands (7) in einem vorbestimmten Abstand von mehr als 2 cm vom erwähnten zweiten Siebband (7) angeordnet sind.

6. Kartoffelroder nach Anspruch 5, **dadurch gekennzeichnet, dass** der oben erwähnte vorbestimmte Abstand, in dem die Sprossen (15) des Krautbands (13) vom zweiten Siebband (7) entlang des steilen Teils (11) des erwähnten zweiten Siebbands (7) angeordnet sind, mindestens 3 cm und vorzugsweise mindestens 4 cm beträgt.

7. Kartoffelroder nach einem der Ansprüche 1 bis 6, **dadurch gekennzeichnet, dass** der Abstand, in dem die Sprossen (15) des Krautbands (13) vom zweiten Siebband (7) entlang des steilen Teils (11) des erwähnten zweiten Siebbands (7) angeordnet sind, variabel ist, insbesondere zumindest im Bereich zwischen 2,5 und 4,5 cm, und vorzugsweise zumindest im Bereich zwischen 2 und 5 cm liegt.

8. Kartoffelroder nach einem der Ansprüche 1 bis 7, **dadurch gekennzeichnet, dass** die oben erwähnten Sprossen (15) des Krautbands (13) entlang des steilen Teils (11) des zweiten Siebbands (7) in einem so großen vorbestimmten Abstand vom erwähnten zweiten Siebband (7) angeordnet sind, dass die erwähnten Sprossen (15) selbst das unkontrollierte Zurückrollen der Kartoffeln auf dem steilen Teil (11) des zweiten Siebbands (7) verhindern.

9. Kartoffelroder nach einem der Ansprüche 1 bis 8, **dadurch gekennzeichnet, dass** auf den oben erwähnten steilen Teil (11) des zweiten Siebbands (7) in Drehrichtung (8) des erwähnten Siebbands (7) ein weniger steiler Teil (12) folgt, wobei der Abstand zwischen den Sprossen (15) des Krautbands (13) und dem zweiten Siebband (7) entlang dieses weniger steilen Teils (12) in Drehrichtung (8) des zweiten Siebbands (7) größer wird, insbesondere durch die Tatsache, dass das Krautband (13) weiterhin praktisch gerade gemäß dem Neigungswinkel (α) des steilen Teils (11) des zweiten Siebbands (7) entlang dieses weniger steilen Teils (12) des Letzteren (7) verläuft.

10. Kartoffelroder nach einem der Ansprüche 1 bis 9, **dadurch gekennzeichnet, dass** auf das zweite Siebband (7) ein drittes Band (24) folgt, insbesondere ein Nietenband (24), wobei dieses dritte Band (24) mit Vorsprüngen versehen ist, auf denen die Kartoffeln liegen bleiben und zwischen denen kleinere Teile von Verunreinigungen wie Krautanteile und kleine Kluten oder Steine ausgesondert werden.

11. Kartoffelroder nach einem der Ansprüche 1 bis 10, **dadurch gekennzeichnet, dass** Krautabstreifer (33, 34) sowohl auf der Ober- als auch auf der Unterseite des Krautbands (13) vorgesehen sind, um Kartoffeln zu lösen, die am Kartoffelkraut hängen bleiben, das durch das Krautband (13) mitgeführt wird.

12. Kartoffelroder nach einem der Ansprüche 1 bis 11, **dadurch gekennzeichnet, dass** der oben erwähnte vorbestimmte Winkel (α), in dem zumindest der oben erwähnte steile Teil (11) des zweiten Siebbands (7) nach oben gerichtet ist, größer als 25° ist, und vorzugsweise größer als 27°.

13. Kartoffelroder nach einem der Ansprüche 1 bis 12, **dadurch gekennzeichnet, dass** der oben erwähnte vorbestimmte Winkel (α), in dem zumindest der oben erwähnte steile Teil (11) des zweiten Siebbands (7) nach oben gerichtet ist, kleiner als 35° ist, und vorzugsweise zwischen 28 und 32° liegt.

14. Kartoffelroder nach einem der Ansprüche 1 bis 13, **dadurch gekennzeichnet, dass** das zweite Siebband (7) entworfen ist, um sich mit einer ersten Geschwindigkeit zu drehen, während das Krautband (13) entworfen ist, um sich mit einer zweiten Geschwindigkeit zu drehen, wobei das Verhältnis zwischen der oben erwähnten ersten und zweiten Geschwindigkeit größer oder gleich 1 ist, und vorzugsweise kleiner als 1,4 ist.

## Revendications

1. Arracheuse de pommes de terre comprenant au moins une unité d'arrachage (1), une première bande de criblage (5) pour éliminer par criblage la terre des pommes de terre arrachées par l'unité d'arrachage (1), et une deuxième bande de criblage (7) qui se connecte à la première bande de criblage (5) et tourne dans un sens prédéterminé (8), au moins une partie en pente raide (11) de ladite deuxième bande de criblage (7) étant dirigée vers le haut dans le sens de rotation (8) susmentionné à un angle prédéterminé (α) supérieur à 20°, et une bande de séparation des fanes (13) à trame grossière, montée de telle sorte qu'elle tourne autour ladite deuxième bande de criblage (7), également dans le sens de rotation (8) susmentionné, de telle sorte que ladite bande de séparation des fanes (13) s'étend au moins avec une partie de sa largeur entre la première et la deuxième bande de criblage (5 et 7), la bande de séparation des fanes (13) à trame grossière étant guidée étroitement accolée à la partie en pente raide (11) de la deuxième bande de criblage (7) afin d'empêcher les pommes de terre arrachées de rouler involontairement en arrière au moins sur cette partie en pente raide (11) de la deuxième bande de criblage (7), **caractérisée en ce que** l'angle prédéterminé (α) susmentionné est inférieur à 40°, et **en ce que** la bande de séparation des fanes (13) est une bande à barres transversales (15) sur lesquelles aucune saillie n'est prévue, ou sur lesquelles des saillies sont prévues qui font saillie de moins de 4 cm de la surface des barres transversales (15), la hauteur de la partie de la largeur de la bande de séparation des fanes (13) s'étendant entre la première et la deuxième bande de criblage (5 et 7) faisant moins de 8 cm.

2. Arracheuse de pommes de terre selon la revendication 1, **caractérisée en ce que** la hauteur de la partie de la bande de séparation des fanes (13) qui s'étend entre la première et la deuxième bande de criblage (5 et 7) fait moins de 7 cm, et de préférence moins de 6 cm.

3. Arracheuse de pommes de terre selon la revendication 1 ou 2, **caractérisée en ce qu'**aucune saillie n'est prévue sur les barres transversales (15) de la bande de séparation des fanes (13), ou des saillies sont prévues qui sont situées à une distance les unes des autres qui est d'au moins 8 cm et en particulier d'au moins 10 cm.

4. Arracheuse de pommes de terre selon l'une quelconque des revendications 1 à 3, **caractérisée en ce que** les barres susmentionnées (15) de la bande de séparation des fanes (13) ont une hauteur de moins de 4,5 cm, et en particulier une hauteur de moins de 3,5 cm.

5. Arracheuse de pommes de terre selon l'une quelconque des revendications 1 à 4, **caractérisée en ce que** les barres susmentionnées (15) de la bande de séparation des fanes (13) le long de la partie en pente raide (11) de la deuxième bande de criblage (7) sont disposées à une distance prédéterminée de plus de 2 cm de ladite deuxième bande de criblage (7).

6. Arracheuse de pommes de terre selon la revendication 5, **caractérisée en ce que** la distance prédéterminée susmentionnée à laquelle les barres (15) de la bande de séparation des fanes (13) sont disposées de la deuxième bande de criblage (7) le long de la partie en pente raide (11) de ladite deuxième bande de criblage (7) est d'au moins 3 cm, et de préférence d'au moins 4 cm.

7. Arracheuse de pommes de terre selon l'une quelconque des revendications 1 à 6, **caractérisée en ce que** la distance à laquelle les barres (15) de la bande de séparation des fanes (13) sont disposées de la deuxième bande de criblage (7) le long de la partie en pente raide (11) de ladite deuxième bande de criblage (7) est variable, en particulier au moins dans la plage entre 2,5 et 4,5 cm, et de préférence au moins dans la plage entre 2 et 5 cm.

8. Arracheuse de pommes de terre selon l'une quelconque des revendications 1 à 7, **caractérisée en ce que** les barres susmentionnées (15) de la bande de séparation des fanes (13) sont disposées le long de la partie en pente raide (11) de la deuxième bande de criblage (7) à une distance prédéterminée tellement grande de ladite deuxième bande de criblage (7) que lesdites barres (15) mêmes empêchent les pommes de terre de rouler involontairement en arrière sur la partie en pente raide (11) de la deuxième bande de criblage (7).

9. Arracheuse de pommes de terre selon l'une quelconque des revendications 1 à 8, **caractérisée en ce que** la partie en pente raide (11) susmentionnée de la deuxième bande de criblage (7) dans le sens de rotation (8) de ladite bande de criblage (7) est suivie par une partie en pente moins raide (12), la distance entre les barres (15) de la bande de séparation des fanes (13) et la deuxième bande de criblage (7), le long de cette pente moins raide (12), augmentant dans le sens de rotation (8) de la deuxième bande de criblage (7), en particulier du fait que la bande de séparation des fanes (13) continue à courir virtuellement en ligne droite selon l'angle d'inclinaison (α) de la partie en pente raide (11) de la deuxième bande de criblage (7) le long de la partie en pente moins raide (12) de cette dernière (7).

10. Arracheuse de pommes de terre selon l'une quelconque des revendications 1 à 9, **caractérisée en ce que** la deuxième bande de criblage (7) est suivie par une troisième bande (24), en particulier une bande à ergots (24), laquelle troisième bande (24) est pourvues de saillies sur lesquelles les pommes de terre reposent et entre lesquelles de plus petits morceaux d'impuretés tels que des morceaux de fanes et des petites mottes ou de petits cailloux sont séparés.

11. Arracheuse de pommes de terre selon l'une quelconque des revendications 1 à 10, **caractérisée en ce que** des éléments dépouilleurs de fanes (33, 34) sont prévus tant sur le côté supérieur que sur le côté inférieur de la bande de séparation des fanes (13) pour détacher les pommes de terre qui restent attachées aux fanes entraînées par la bande de séparation des fanes (13).

12. Arracheuse de pommes de terre selon l'une quelconque des revendications 1 à 11, **caractérisée en ce que** l'angle prédéterminé (α) susmentionné auquel au moins la partie en pente raide (11) susmentionnée de la deuxième bande de criblage (7) est dirigée vers le haut est supérieur à 25°, de préférence supérieur à 27°.

13. Arracheuse de pommes de terre selon l'une quelconque des revendications 1 à 12, **caractérisée en ce que** l'angle prédéterminé (α) susmentionné auquel au moins la partie en pente raide (11) susmentionnée de la deuxième bande de criblage (7) est dirigée vers le haut est inférieur à 35°, de préférence de 28 à 32°.

14. Arracheuse de pommes de terre selon l'une quelconque des revendications 1 à 13, **caractérisée en ce que** la deuxième bande de criblage (7) est conçue pour tourner à une première vitesse, tandis que la bande de séparation des fanes (13) est conçue pour tourner à une deuxième vitesse, le rapport entre les première et deuxième vitesses susmentionnées étant supérieur ou égal à 1, et de préférence inférieur à 1,4.
